# EUROPEAN PATENT APPLICATION

(11) **EP 4 749 417 A1**
(43) Date of publication of application: **27.05.2026**
(21) Application number: 24855202.8
(22) Date of filing: 19.01.2024
(51) Int. Cl.: G06F 3/0481, G06F 16/338

(54) **DATA ANALYSIS METHOD AND RELATED SYSTEM**

(30) Priority: 24.08.2023 CN 202311075219
(71) Applicant: Huawei Cloud Computing Technologies Co., Ltd., Gui'an New District, Guizhou 550025 (CN)
(72) Inventor: YANG, Changhe, Guiyang, Guizhou 550025 (CN); XU, Ke, Guiyang, Guizhou 550025 (CN); WEI, Datong, Guiyang, Guizhou 550025 (CN); WANG, Jiannan, Guiyang, Guizhou 550025 (CN)
(74) Representative: Thun, Clemens
(86) International application number: PCT/CN2024/073192
(87) International publication number: WO 2025/039467

(57) **Abstract**

This application provides a data analysis method, applied to an artificial intelligence (AI) field and performed by a data analysis system. The data analysis system is configured to perform data analysis through a plurality of rounds of dialogs. The method includes: receiving input content of a user; performing intent classification based on the input content, and determining a task type indicated by the input content; when the task type indicated by the input content is an instruction-based task, determining a subtask type of the instruction-based task through instruction keyword matching, and obtaining historical dialog-associated content of the input content; and processing the historical dialog-associated content based on the subtask type to obtain an adjusted data analysis result. In the method, when a data analysis result is an unexpected result, directional adjustment can be performed on the data analysis result through an instruction-based task. "What-you-see-is-what-you-get" directional adjustment may be combined with an interaction manner of a natural language dialog, thereby improving data analysis efficiency and user experience.

## Description

This application claims priority to Chinese Patent Application No. 202311075219.3, filed with the China National Intellectual Property Administration on August 24, 2023 and entitled "DATA ANALYSIS METHOD AND RELATED SYSTEM", which is incorporated herein by reference in its entirety.

### TECHNICAL FIELD

This application relates to the field of artificial intelligence (artificial intelligence, AI) technologies, and in particular, to a data analysis method and system, a computing device cluster, a computer-readable storage medium, and a computer program product.

### BACKGROUND

With the advent of the information era, data is growing explosively. Therefore, diversified products for data governance and data analysis are generated, for example, various business intelligence (business intelligence, BI) products. Due to the breakthrough and application of large model technologies, natural language-related technologies such as natural language to structured query language (natural language to structured query language, NL2SQL), automatic chart recommendation, and augmented analysis have become main development trends of third-generation BI products.

Currently, data analysis capabilities (such as data query and analysis capabilities) are the core competitiveness of the BI products. How to design and provide a plurality of easy-to-use interaction supported auxiliary analysis tools, to reduce repeated development costs of data analysts and improve data analysis efficiency has become one of the important evaluation criteria for building competitiveness.

In complex analysis scenarios in which users start from scratch to exploratorily analyze unknown data and intend to quickly explore insights, because search-based interaction naturally has characteristics of a progressive iterative discovery procedure: "input, association, and configuration", exploratory question-and-answer or dialog forms based on a search box have begun to gain wide popularity, and have become the cornerstone of interactive analysis forms of next-generation BI products. As an extremely concise and natural form of human-computer interaction, natural languages have natural adaptability to BI products in this interaction form, and accordingly begin to be introduced for exploration.

In recent years, large model analysis and inference capabilities are rising, and the natural languages are widely used in data analysis systems of the BI products. A natural language assisted data analysis system includes a dialog system (also referred to as a question-and-answer system) that supports a plurality of rounds of natural language interaction. The system supports analysis experience in a natural language interaction form, and uses a natural language dialog form, so that an analysis procedure of a model does not need to be sensed. This lowers a threshold for data analysis.

When a data analysis result output by the data analysis system does not meet an expectation of the user, the user usually needs to re-input the natural language to continue data analysis. However, in the foregoing method, it is difficult to implement directional adjustment on a data analysis result. This reduces data analysis efficiency and affects user experience.

### SUMMARY

This application provides a data analysis method. In the method, when a data analysis result is an unexpected result, directional adjustment can be performed on the data analysis result through an instruction-based task, to construct a system that supports both a smooth natural language dialog and rich "what-you-see-is-what-you-get" UI interaction. This improves data analysis efficiency and user experience. This application further provides a data analysis system, a computing device cluster, a computer-readable storage medium, and a computer program product that correspond to the method.

According to a first aspect, this application provides a data analysis method. The method may be applied to a data analysis system, and the data analysis system is configured to perform data analysis through a plurality of rounds of dialogs. The data analysis system may be a software system, and the software system may be a BI product or integrated into a BI product. For example, the data analysis system may be integrated into an existing BI cloud service analysis engine as a plug-in. The software system may be deployed in a computing device cluster, and the computing device cluster executes program code of the software system, to perform the data analysis method in this application. The data analysis system may alternatively be a hardware system, for example, may be a computing device cluster having a data analysis function. When the computing device cluster runs, the data analysis method in this application is performed.

Specifically, the data analysis system receives input content of a user, performs intent classification based on the input content, and determines a task type indicated by the input content, where the task type includes a natural language-based analysis task or an instruction-based task. When the task type indicated by the input content is the instruction-based task, the data analysis system may determine a subtask type of the instruction-based task through instruction keyword matching, and obtain historical dialog-associated content of the input content. The data analysis system may process the historical dialog-associated content based on the subtask type to obtain an adjusted data analysis result.

In the method, when a data analysis result is an unexpected result, the instruction-based task can be executed to perform directional adjustment on the data analysis result, where the instruction-based task may achieve "what-you-see-is-what-you-get". "What-you-see-is-what-you-get" directional adjustment may be combined with an interaction manner of a natural language dialog, to construct a system that supports both a smooth natural language dialog and rich "what-you-see-is-what-you-get" UI interaction. This improves data analysis efficiency and user experience. Further, an instruction operation of "what-you-see-is-what-you-get" interaction performed by the user may also be preconfigured as a unified natural language, to ensure continuity and immersive experience of the user (for example, a data analyst) in a multi-round question-and-answer procedure.

In some possible implementations, the data analysis system may further obtain a feature vector of the input content, and obtain a feature vector of at least one dialog topic tree of the user. Each node in the dialog topic tree records information about a round of dialog, the information about the dialog includes a natural language input by the user and/or a label parsed out from the natural language, and the feature vector of the dialog topic tree is determined based on a feature vector of a node in the dialog topic tree. Correspondingly, the data analysis system may determine a similarity between the feature vector of the input content and the feature vector of the at least one dialog topic tree; and when a similarity between the feature vector of the input content and a feature vector of a target topic tree meets a first specified condition, the data analysis system may determine that the task type is the instruction-based task.

In the method, the task type is determined based on the similarity between the feature vector of the input content and the feature vector of the dialog topic tree, to achieve high accuracy.

In some possible implementations, the data analysis system may further determine a similarity between the feature vector of the input content and a feature vector of at least one node in the target topic tree; and when a similarity between the feature vector of the input content and a feature vector of a target node in the target topic tree meets a second specified condition, the data analysis system may obtain the feature vector of the target node, where the feature vector is obtained by encoding at least one of the natural language input by the user, chart slot information, chart data, and a chart presentation style.

In the method, similarity calculation is performed between the feature vector of the input content and the feature vector of the node in the target topic tree, so that the feature vector of the target node is accurately obtained based on the similarity as a context (the historical dialog-associated content) to participate in data analysis, thereby improving accuracy of data analysis. Further, when the context is determined, a weight calculation factor may be added to the similarity calculation based on a prior knowledge of a node level and a dialog round index, so that an algorithm is more inclined to select a dialog that is more completely fine-adjusted and updated by the user as a current context, thereby improving accuracy of data analysis.

In some possible implementations, the data analysis system may further create, for the target topic tree, a child node belonging to the target node, where the child node is used to record an instruction operation of a current round of dialog and returned chart slot information. In this way, the target topic tree can be updated, so that directional adjustment can be subsequently performed based on a result of the current round of dialog.

In some possible implementations, when the similarity between the feature vector of the input content and the feature vector of the at least one dialog topic tree does not meet the first specified condition, the data analysis system may alternatively determine that the task type is the natural language-based analysis task.

In this way, an existing solution may be compatible, and data analysis is continued by the natural language-based analysis task, to achieve high availability.

In some possible implementations, the data analysis system may further create a new dialog topic tree, where the dialog topic tree includes a root node, and the root node is configured to record the input content and a label parsed out from the input content. In the method, the new dialog topic tree is created for the natural language-based analysis task, so that directional adjustment can be performed subsequently based on the new dialog topic tree.

In some possible implementations, the subtask type includes at least one of augmented analysis, chart type modification, chart presentation style modification, and label modification. In this way, different types of analysis requirements of the user can be met, to achieve high availability.

In some possible implementations, when the input content successfully matches a chart type keyword, the data analysis system may determine that the subtask type is the chart type modification; when the input content successfully matches an algorithm keyword, the data analysis system may determine that the subtask type is the augmented analysis; when the input content successfully matches a chart style keyword, the data analysis system may determine that the subtask type is the chart presentation style modification; or when matching with the input content fails, the data analysis system may determine that the subtask type is the label modification.

In the method, classification efficiency of the subtask type is improved through a simple keyword matching operation, and complex calculation is not needed, to save computing resources.

According to a second aspect, this application provides a data analysis system. The system is configured to perform data analysis through a plurality of rounds of dialogs, and the system includes:
an interaction subsystem, configured to receive input content of a user;
a routing control subsystem, configured to: perform intent classification based on the input content, determine a task type indicated by the input content, where the task type includes a natural language-based analysis task or an instruction-based task, when the task type indicated by the input content is the instruction-based task, determine a subtask type of the instruction-based task through instruction keyword matching, and obtain historical dialog-associated content of the input content; and
an analysis subsystem, configured to process the historical dialog-associated content based on the subtask type to obtain an adjusted data analysis result.

In some possible implementations, the routing control subsystem is further configured to:
obtain a feature vector of the input content, and obtain a feature vector of at least one dialog topic tree of the user, where each node of the dialog topic tree records information about a round of dialog, the information about the dialog includes a natural language input by the user and/or a label parsed out from the natural language, and the feature vector of the dialog topic tree is determined based on a feature vector of a node in the dialog topic tree.

The routing control subsystem is specifically configured to:
determine a similarity between the feature vector of the input content and the feature vector of the at least one dialog topic tree; and
when a similarity between the feature vector of the input content and a feature vector of a target topic tree meets a first specified condition, determine that the task type is the instruction-based task.

In some possible implementations, the routing control subsystem is specifically configured to:
determine a similarity between the feature vector of the input content and a feature vector of at least one node in the target topic tree; and
when a similarity between the feature vector of the input content and a feature vector of a target node in the target topic tree meets a second specified condition, obtain the feature vector of the target node, where the feature vector is obtained by encoding at least one of the natural language input by the user, chart slot information, chart data, and a chart presentation style.

In some possible implementations, the routing control subsystem is further configured to:
create, for the target topic tree, a child node belonging to the target node, where the child node is used to record an instruction operation of a current round of dialog and returned chart slot information.

In some possible implementations, the routing control subsystem is specifically configured to:
when the similarity between the feature vector of the input content and the feature vector of the at least one dialog topic tree does not meet the first specified condition, determine that the task type is the natural language-based analysis task.

In some possible implementations, the routing control subsystem is further configured to:
create a new dialog topic tree, where the dialog topic tree includes a root node, and the root node is configured to record the input content and a label parsed out from the input content.

In some possible implementations, the subtask type includes at least one of augmented analysis, chart type modification, chart presentation style modification, and label modification.

In some possible implementations, the routing control subsystem is specifically configured to:
when the input content successfully matches a chart type keyword, determine that the subtask type is the chart type modification;
when the input content successfully matches an algorithm keyword, determine that the subtask type is the augmented analysis;
when the input content successfully matches a chart style keyword, determine that the subtask type is the chart presentation style modification; or
when matching with the input content fails, determine that the subtask type is the label modification.

According to a third aspect, this application provides a computing device cluster. The computing device cluster includes at least one computing device, and the at least one computing device includes at least one processor and at least one memory. The at least one processor and the at least one memory communicate with each other. The at least one processor is configured to execute instructions stored in the at least one memory, to cause the computing device or the computing device cluster to perform the data analysis method according to any one of the first aspect or the implementations of the first aspect.

According to a fourth aspect, this application provides a computer-readable storage medium. The computer-readable storage medium stores instructions. The instructions instruct a computing device or a computing device cluster to perform the data analysis method according to any one of the first aspect or the implementations of the first aspect.

According to a fifth aspect, this application provides a computer program product including instructions. When the computer program product runs on a computing device or a computing device cluster, the computing device or the computing device cluster is caused to perform the data analysis method according to any one of the first aspect or the implementations of the first aspect.

Based on the implementations provided in the foregoing aspects, the implementations in this application may be further combined to provide more implementations.

### BRIEF DESCRIPTION OF DRAWINGS

To describe the technical methods in embodiments of this application more clearly, the following briefly describes the accompanying drawings used in describing embodiments.
FIG. 1 is a diagram of an architecture of a data analysis system according to an embodiment of this application;
FIG. 2 is a schematic flowchart of performing routing by a question-and-answer routing model according to an embodiment of this application;
FIG. 3 is a diagram of a structure of a dialog topic tree according to an embodiment of this application;
FIG. 4A and FIG. 4B is a schematic interaction flowchart of data query and analysis performed by a data analysis system according to an embodiment of this application;
FIG. 5 is a flowchart of a data analysis method according to an embodiment of this application;
FIG. 6 is a diagram of an interface in a viewing state of an analysis engine dashboard according to an embodiment of this application;
FIG. 7 is a diagram of an interaction interface of different phases of data analysis according to an embodiment of this application;
FIG. 8 is a diagram of an interface for importing a data analysis result into an analysis engine dashboard according to an embodiment of this application;
FIG. 9 is a diagram of a structure of a computing device according to an embodiment of this application;
FIG. 10 is a diagram of a structure of a computing device cluster according to an embodiment of this application;
FIG. 11 is a diagram of a structure of another computing device cluster according to an embodiment of this application; and
FIG. 12 is a diagram of a structure of still another computing device cluster according to an embodiment of this application.

### DESCRIPTION OF EMBODIMENTS

The terms "first" and "second" in embodiments of this application are merely intended for description, and shall not be understood as an indication or implication of relative importance or an implicit indication of a quantity of indicated technical features. Therefore, a feature limited by "first" or "second" may explicitly or implicitly include one or more features.

First, some technical terms in embodiments of this application are described.

Business intelligence (Business Intelligence, BI) refers to performing data analysis by using a modern data warehouse (data warehouse) technology, an online analytical processing (Online analytical processing, OLAP) technology, a data mining (data mining) technology, and a data presentation technology to mine and utilize data value. The BI may be applied to different industries or scenarios to perform data analysis on different types of data. For example, data processed by the BI may be commodity production data recorded by a production management system, quality inspection data recorded by a quality management system, sales data recorded by a sales system, or code data stored on a code hosting platform. The BI performs data analysis on the data to provide a corresponding suggestion.

The business intelligence usually divides a data analysis capability into three sub-capabilities: a data query capability, a visualized presentation form capability, and an augmented analysis capability. The following separately describes the data query capability, the visualized presentation form capability, and the augmented analysis capability.

The data query capability is a capability of constructing a specialized query language-based query statement based on an input of a user, efficiently executing an underlying query statement, and quickly returning data needed by the user. The data query capability needs an appropriate design of a domain-specific language (domain-specific language, DSL) for data querying, which serves as a bridge that translates a user interaction input on a user interface (user interface, UI) into a data query statement. The domain-specific language is a programming language optimized for a specific type of problems, and includes high-level abstractions. The DSL usually uses concepts and rules from specialized domains.

The visualized presentation form capability is a capability of generating a simple and elegant visualized chart based on data returned by a query engine. The visualized presentation form capability usually relates to a plurality of possible coding selections and coordinated optimizations of visual channels of visualized elements, to implement quick feedback and presentation experience of "what-you-see-is-what-you-get".

The augmented analysis capability helps users discover potential anomalies and feature patterns in data. Further, the augmented analysis capability may generate a prediction based on an existing phenomenon, derive a possible intelligent data insight, or automatically generate a valuable data story. In this way, data value can be repeatedly mined.

Implementations of the foregoing data analysis capabilities depend on the user interaction on the UI. To be specific, a large quantity of BI products need users to provide complex configuration information such as tables, fields, and filter criteria that are needed for data query. Most BI products retain or use a classic chart slot and a dataset field-based interaction manner that supports the user to perform "drag-and-drop" interaction. In the manner, datasets and table fields are used as available resources, enabling the user to directly present a simple and easy-to-understand chart on a dashboard in a "what-you-see-is-what-you-get" interaction manner. For this configured chart, the user may further perform configuration modification on the chart through a slot panel for the second time. The slot panel and chart display are one-to-one bound, so that a modified result is directly fed back to the user. A "drag-and-drop" manner is undoubtedly simple and effective. If a data analysis task of the user is highly deterministic and purpose-oriented, even extremely complex data query and analysis configuration scenarios can be efficiently supported in the "drag-and-drop" manner.

In a complex analysis scenario in which the user starts from scratch to exploratorily analyze data and intends to quickly explore an insight, the "drag-and-drop" manner cannot achieve a good analysis effect. With the rise of large model analysis and inference capabilities, natural languages are widely used in a data analysis field. A natural language-assisted data analysis system may include the following types: a natural language-assisted segmentation search and single-turn question-and-answer query system, and a dialog system that supports a plurality of rounds of natural language interaction.

The dialog system that supports a plurality of rounds of natural language interaction enables the user to have immersive analysis experience, and uses a pure natural language dialog, so that an analysis procedure of a model does not need to be sensed. This lowers a threshold for data analysis. The foregoing dialog system supports the user to add and make an analysis report on the dashboard by using a pure natural language, and implements seamless embedding of augmented analysis in a dialog form. However, this form is more black-box and makes it difficult for the user to perform directional adjustment on unexpected chart data and presentation results that are provided by the model.

In view of this, this application provides a data analysis method. The method may be applied to a data analysis system, and the data analysis system is configured to perform data analysis through a plurality of rounds of dialogs. The data analysis system may be a software system, and the software system may be a BI product or integrated into a BI product. For example, the data analysis system may be integrated into an existing BI cloud service analysis engine as a plug-in. The software system may be deployed in a computing device cluster, and the computing device cluster executes program code of the software system, to perform the data analysis method in this application. The data analysis system may alternatively be a hardware system, for example, may be a computing device cluster having a data analysis function. When the computing device cluster runs, the data analysis method in this application is performed.

Specifically, the data analysis system may receive input content of a user, then perform intent classification based on the input content, and determine a task type indicated by the input content, where the task type includes a natural language-based analysis task or an instruction-based task. When the task type indicated by the input content is the instruction-based task, the data analysis system determines a subtask type of the instruction-based task through instruction keyword matching, and obtains historical dialog-associated content (also referred to as a context, context content, or context information) of the input content; and then processes the historical dialog-associated content based on the subtask type to obtain an adjusted data analysis result.

In the method, when a data analysis result is an unexpected result, the instruction-based task can be executed to perform directional adjustment on the data analysis result, where the instruction-based task may achieve "what-you-see-is-what-you-get". "What-you-see-is-what-you-get" directional adjustment may be combined with an interaction manner of a natural language dialog, to construct a system that supports both a smooth natural language dialog and rich "what-you-see-is-what-you-get" UI interaction. This improves data analysis efficiency and user experience. Further, an instruction operation of "what-you-see-is-what-you-get" interaction performed by the user may also be preconfigured as a unified natural language, to ensure continuity and immersive experience of the user (for example, a data analyst) in a multi-round question-and-answer procedure.

To make the technical solutions in this application clearer and easier to understand, the following describes a system architecture of a data analysis system in this application with reference to the accompanying drawings.

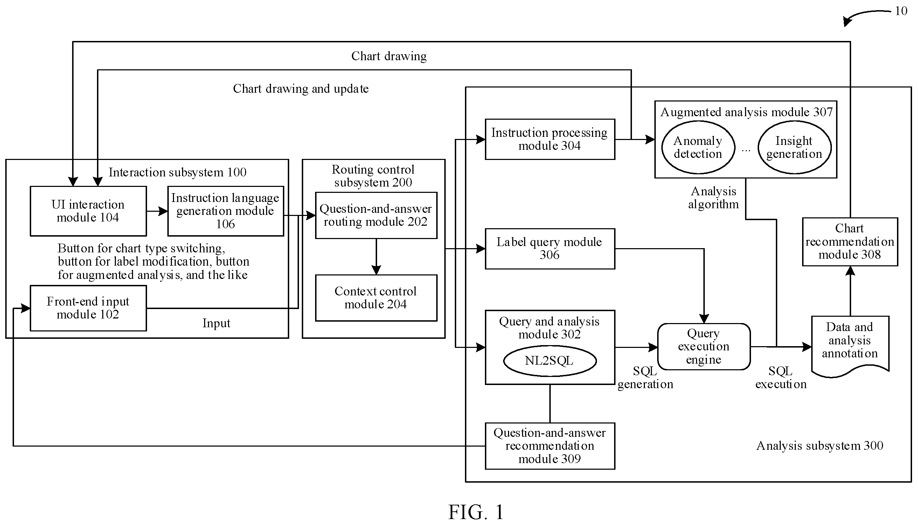

FIG. 1 is a diagram of an architecture of a data analysis system. The system 10 includes an interaction subsystem 100, a routing control subsystem 200, and an analysis subsystem 300. The interaction subsystem 100 is configured to receive input content of a user. The routing control subsystem 200 is configured to: perform intent classification based on the input content, determine a task type indicated by the input content, where the task type includes a natural language-based analysis task or an instruction-based task, and when the task type indicated by the input content is the instruction-based task, determine a subtask type of the instruction-based task through instruction keyword matching, and obtain historical dialog-associated content of the input content. The analysis subsystem 300 is configured to process the historical dialog-associated content based on the subtask type to obtain an adjusted data analysis result.

In some possible implementations, the interaction subsystem 100 includes a front-end input module 102 and a UI interaction module 104. The front-end input module 102 is configured to receive a natural language input by the user. In other words, the input content of the user may be a natural language. The UI interaction module 104 is configured to: provide, for the user, a task triggering control corresponding to at least one subtask type, and receive an interaction operation triggered by the user by using the task triggering control, where the interaction operation may be an instruction-based operation. The task triggering control may be a menu, a button, or a shortcut key provided on a UI interface. In some possible implementations, the subtask type includes one or more of augmented analysis, chart type modification, chart presentation style modification, and label modification. A label refers to a labeled segment, and may generally be a data field (corresponding to a chart slot) of a chart. Correspondingly, a button for chart type switching, a button for label modification, a button for chart presentation style modification, or a button for augmented analysis is provided on the UI interface.

Further, the interaction subsystem 100 may further include an instruction language generation module 106. The instruction language generation module 106 is configured to convert the interaction operation of the user into a natural language. The instruction language generation module 106 may convert the interaction operation into the natural language in a rule-based manner.

The routing control subsystem 200 is in the data analysis system 10, and is an important subsystem of a multi-round dialog data analysis system that implements both a natural language input and "what-you-see-is-what-you-get" UI interaction while ensuring correct contexts. The subsystem 200 can receive any input content generated by the user. The input content may be a natural language, for example, an NL2SQL-based question-and-answer. The input content may alternatively be an interaction operation, for example, an instruction-based selection performed by the user on a chart in an existing dialog, and a directional adjustment of the chart, including but not limited to a label modification (for example, post-processing fine-adjustment of a label) of a data analysis result (usually in a chart form, also referred to as a data analysis result chart in some cases) by the user, an instruction-based modification of a chart presentation style and a chart type by the user, or an implementation of an augmented analysis algorithm. To process a plurality of natural language inputs having different subtasks and enable different interaction operations to support a unified implementation entry in the system, the routing control subsystem 200 implements an algorithm procedure based on intent classification and context control, so that different natural languages of the user are routed to respective processing modules in the analysis subsystem 300 for processing, and data analysis results are uniformly encapsulated and returned.

The routing control subsystem 200 includes a question-and-answer routing module 202 and a context control module 204. The question-and-answer routing module 202 is configured to: perform intent classification on the natural language (the natural language input by the user or the natural language converted by the instruction language generation module), determine the task type indicated by the input content, and when the task type indicated by the input content is the instruction-based task, determine the subtask type of the instruction-based task through instruction keyword matching. The context control module 204 is configured to obtain the historical dialog-associated content of the input content, that is, select a context.

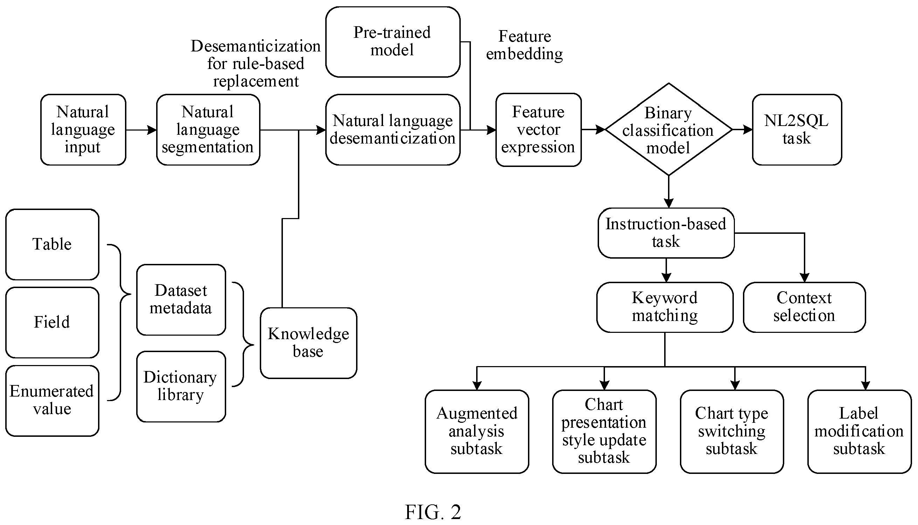

The question-and-answer routing module 202 may implement task routing by using a question-and-answer routing model. As shown in FIG. 2, a task of performing intent classification on the natural language input by the user is decomposed into a two-phase classification procedure from coarse to fine. The natural language generated by the instruction language generation module for "what-you-see-is-what-you-get" interaction of the user may be directly classified into an instruction natural language in a simplified manner in a form of a preconfigured specific character (for example, a magic character, including but not limited to a character like "*" and "#") and directly subjected to second-phase fine classification, and the natural language may alternatively be used as a general natural language to complete an entire procedure of a question-and-answer classification model.

In a first phase of the intent classification, the question-and-answer classification model may determine the task type indicated by the input content of the user, to distinguish whether the user intends to perform, based on the natural language, a new natural language-based analysis task (for example, NL2SQL) or perform an instruction-based operation. The instruction-based operation may be subdivided into label adjustment (adjustment of labeled segment slots of a chart), chart type switching, chart presentation style update, or augmented analysis in a subsequent second phase.

Considering that a statement for executing a natural language query and a statement for executing the instruction-based operation have significant differences in syntax structures and result components of entity matching, the question-and-answer routing model may use a natural language component analysis procedure that is unaware of metadata semantic information to perform intent classification.

During specific implementation, the data analysis system 10 (for example, the question-and-answer routing module 202 in the data analysis system 10) may input an entire sentence of the natural language into a pre-trained natural language model (also referred to as a pre-trained model), to represent the natural language in a continuous feature space. Before the entire sentence of the natural language is input into the pre-trained model, a desemanticization operation may be performed first.

During preprocessing, the data analysis system 10 may use metadata information in a dataset to construct and generate a field tree data structure having an inverted index, where the field tree data structure includes at least one of a data table, a field, an index of an enumerated value, a category, a name, a description, and synonym information in the dataset. The data analysis system 10 may further construct a dictionary library, for example, a common description dictionary library, as an input of the question-and-answer routing model to assist in parsing of the natural language. The field tree data structure and the dictionary library may be stored in a knowledge base in a form of a knowledge graph.

During the desemanticization operation, the data analysis system 10 may perform segmentation on the natural language input by the user, and perform similarity matching on each segment based on the foregoing data structure (for example, a dictionary tree data structure). If the matching succeeds, the segment in the natural language may be directly replaced with a matched entity type in a rule-based manner based on a matched result type in the knowledge graph. For example, some segments may be replaced with fields and enumerated values. When an entire sentence feature is embedded based on the pre-trained natural language model, a corresponding field data information annotation is generated for the natural language input by the user, where the field data information annotation may include a data type of a field.

For a segment that is unsuccessfully matched, the data analysis system 10 may perform auxiliary matching based on a commonly used description dictionary library. Specifically, the data analysis system 10 performs classification based on a rule-based model, and determines whether the segment is marked as a filter criterion of a time field. If the segment is identified as related to the time field, the segment may be replaced with a natural language of "time", and participate in a subsequent feature embedding process.

For example, when the user enters a question of "What was the revenue of the Beijing representative office last year?", a segmentation model may decompose the complete natural language into a segmentation sequence of "what was", "the revenue", "of", "the Beijing representative office", and "last year". "The Beijing representative office" may be directly replaced with "dimension enumerated value" when being matched with an enumerated value of "the Beijing representative office" in a "representative office" dimension field in metadata information. "Last year" is not matched with an entity matching rule and is identified as "time" in subsequent time field classification. "The revenue" is matched with a measurement field in metadata of a dataset and is also replaced. Finally, a natural language undergone entire sentence feature vector embedding based on the pre-trained model is "What is the measurement of the dimension enumerated value at specific time".

The foregoing semantic abstraction operation can eliminate impact of natural language semantic information of a metadata table, a field, and an enumerated value on embedding of the entire sentence feature, and strengthen an expression capability of a vectorized representation in terms of statement component and syntax analysis. The natural language of the user is expressed as a feature vector after undergone the foregoing procedure. The data analysis system 10 may use a machine learning-based binary classifier to implement classification into NL2SQL and instruction-based natural language. A natural language marked as an NL2SQL query task is directly routed to an NL2SQL module of the analysis subsystem 300, and a natural language classified as an instruction-based intent continues to be processed in the second phase.

In the second phase of the intent classification, the instruction-based natural language (for example, the natural language obtained by the instruction language generation module 106 through conversion) may be classified into a subtask defined by the question-and-answer routing model. Specifically, the instruction-based natural language may be classified into the following types of subtasks: augmented analysis, chart type modification, chart presentation style update, and label modification.

In the system in FIG. 1, an operation of the "what-you-see-is-what-you-get" interaction performed by the user may also be preconfigured as a unified natural language based on the instruction language generation module 106, to ensure continuity and immersive experience of a data analyst in a multi-round question-and-answer procedure. The data analysis system 10 may integrate and unify all related and supported keywords in instructions preconfigured in the augmented analysis subtask, the chart type modification subtask, the chart presentation style update subtask, or the label modification subtask, to implement a function of subtask intent classification by using a lightweight rule-based model guided by keyword matching.

An instruction-based natural language input performed by the user is naturally characterized by the unity of keywords. For example, when a chart type is switched, a chart type is usually specified. When an augmented analysis algorithm is executed, the natural language input usually includes a name of the algorithm. Therefore, when the data analysis system 10 matches the natural language input by the user with a keyword, if a keyword corresponding to this type of operation is identified, the natural language is routed to a corresponding processing module for specific instruction-based execution.

For example, if the instruction-based natural language input includes a "line chart", the question-and-answer classification model may identify that the subtask type is switching chart type. If the instruction-based natural language input includes "anomaly detection", the question-and-answer classification model may identify that the subtask type is augmented analysis. If the instruction-based natural language input includes a "grayscale image", the question-and-answer classification model may identify that the subtask type is chart presentation style update. When the instruction-based natural language input does not include any keyword, the question-and-answer classification model may identify that the subtask type is label modification, and specifically, a subtask of modifying a labeled segment of a chart. For a subtask of the label modification type, the data analysis system 10 may search for all fields and enumerated value entities in a label of a chart selected by a context control model, associate the fields and the enumerated value entities with matched fields and matched enumerated value entities in the segment in the natural language input of the user in the first phase, to determine a label that needs to be modified by the user, use the task triggering control, for example, a modify button, to update the label, and use an updated label as an input, so that the task can be routed to a segmentation query module of the analysis subsystem 300.

The context control module 204 may obtain a context by using the context control model. The context control model is configured to: after a first phase of processing of the question-and-answer routing model, help the user select a context in a historical dialog before the user performs an instruction-based operation described in a natural language, and determine a data analysis chart for performing the instruction-based operation. Therefore, the context control model may perform modeling on question-and-answer content of each round of dialog executed by the user based on the natural language. In the context control model provided by the system, a single-round dialog executed by the user may include multi-modal heterogeneous data, including the input natural language, a label (chart slot information), chart data, and a chart presentation style configuration. The context control module may encode the multi-modal heterogeneous data into a feature vector, and use the feature vector as a representation of each round of dialog.

The data analysis system 10 also draws on an idea of "state transition" to construct a "dialog topic tree". The dialog topic tree is a tree-like data structure that records a dialog. Each node in the dialog topic tree records information about a round of dialog, and the information about the dialog includes a natural language input by the user and/or a label parsed out from the natural language. In this way, an interaction trajectory of performing a plurality of rounds of question-and-answer/interactive adjustment by the user under a same question-and-answer "topic" in a multi-round question-and-answer may be described.

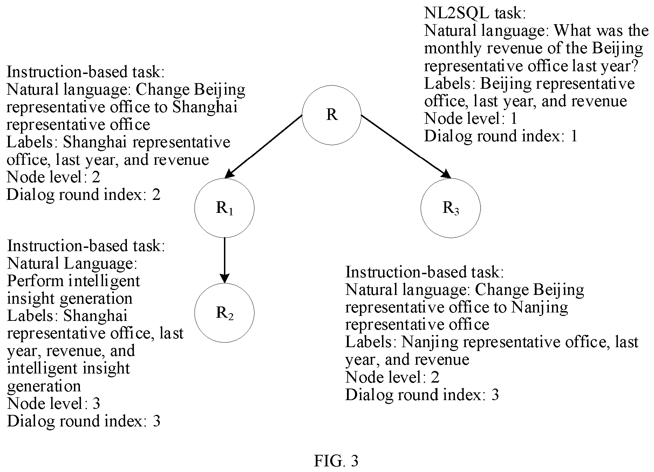

FIG. 3 is a diagram of a structure of a dialog topic tree. Each time the user performs a natural language-based analysis task, for example, when the natural language input by the user is classified into a new NL2SQL task by the question-and-answer routing model, the data analysis system 10 may create a root node R of the dialog topic tree, to represent that the user initiates a dialog of a new topic. When the user performs a what-you-see-is-what-you-get interaction operation or performs a natural language-based instruction-based operation (for example, augmented analysis, chart type switching, chart presentation style update, and label modification) on a chart returned from the NL2SQL, this process is considered as a state transition in this topic, and the data analysis system 10 may create a child node R1 under a current node of a question-and-answer topic tree. The instruction-based operation may be performed a plurality of times, and the operation may be performed on a dialog at any moment in historical dialogs (a to-be-executed dialog manually selected by the user through what-you-see-is-what-you-get interaction or a dialog finally selected based on the context control model). Therefore, each time the user performs the operation, the data analysis system 10 may create a child node (also referred to as a leaf node) for a question topic tree maintained by the data analysis system 10 under a node currently selected for update, and fill in information such as a current operation and a chart and a slot returned by the system.

Based on the foregoing data structure design, the data analysis system 10 may construct a multi-round question-and-answer process in a linear dialog box into a forest structure, and each tree structure (a dialog topic tree) in the forest structure includes all dialog interaction of the user in a dialog topic. Each time a new natural language dialog input is performed, the context control model constructed by the data analysis system 10 also determines, based on a two-phase selection solution, a dialog to which the instruction-based operation of the user is directed.

In a first phase, the data analysis system 10 may select a dialog topic tree from the forest structure, and determine a topic of the user dialog. During specific implementation, the data analysis system 10 may construct a feature expression of each dialog topic tree, that is, construct a feature vector of each dialog topic tree. The feature vector (vectorized expression) of the dialog topic tree is determined by a feature vector of a node in the dialog topic tree.

The feature vector of the node is obtained by encoding at least one of the natural language input by the user, chart slot information, chart data, and a chart presentation style. Each node records one round of dialog in a plurality of rounds of dialogs. Node information of a single dialog that may be used for feature embedding is as follows.

Natural language: As an original input of the user, the natural language is expressed by embedding an entire sentence feature. In the dialog topic tree, natural language inputs corresponding to nodes on a path from a root node to a child node may be combined to express natural language inputs of a plurality of rounds of dialogs.

Label: The label is regarded as a result expression matched with a segmentation entity corresponding to the natural language input by the user. The data analysis system 10 may use information such as a name, a description, and a type of each segmentation entity as an input, to obtain feature vector construction of a segmentation level. In addition, a parameterized configuration item generated by an augmented analysis algorithm may be used as an independent part participating in feature engineering.

Chart presentation style: For the chart presentation style, modifiable configuration items abstracted from chart visualization returned by the system, such as a chart type and a color palette, are summarized, and a manually defined feature vector is constructed for participation in entire feature engineering.

Further, considering that nodes in the dialog topic tree have different contributions to a result expression, the data analysis system 10 may perform a weighted operation on feature vectors of the nodes to obtain the feature vector of the dialog topic tree. A weight calculation factor includes at least one of the following:
node level, where a level of the node in the dialog topic tree may represent fineness of adjusting a question-and-answer result by the user a plurality of times; and specifically, a result of the adjustment performed by the user is more complete at a node at a lower level (closer to the leaf node), the result is more similar to chart data and a presentation result expected by the user, and therefore, the node has a higher weight; and
dialog round index, where each node has a fixed round index in a multi-round dialog structure; and a chart dialog having an index ranked lower (newer dialog) is more likely to be mentioned by the user in a subsequent dialog and therefore has a higher weight.

Based on this, the data analysis system 10 may determine the feature vector of the dialog topic tree based on an extracted feature vector and weight (or contribution) of a single node. The data analysis system 10 extracts a feature vector from the natural language currently input by the user, performs similarity analysis, and finally selects a dialog topic tree that is most similar to a current dialog, to complete a task in the first phase.

In a second phase, the data analysis system 10 selects a specific node in the dialog topic tree, and obtains a feature vector of the node as a context of a current natural language. Essentially, the data analysis system 10 selects a state under a current dialog topic for switching. A basic idea of the second phase is consistent with the solution in the first phase. After vectorized expression is performed on an entire sentence in the natural language of the user, a distance between the vectorized expression and a vectorized expression (feature vector) of each node in a current topic tree is calculated, to determine a similarity. Further, the data analysis system 10 may add the weight calculation factor to similarity calculation based on a prior knowledge of the node level and the dialog round index, so that the context control model is more inclined to select a dialog that is more completely adjusted and updated by the user as a current context.

It should be noted that, in this solution, a parameter and a solution that are consistent with those in the first phase are used in the second phase, so that the dialog topic selected in the first phase is more accurate. Finally, the context control model determines a context of input content (historical dialog-associated content) that is classified as an instruction-based task.

In some possible implementations, the analysis subsystem 300 includes one or more of a query and analysis module 302, a label query module 304, an instruction processing module 306, an augmented analysis module 307, or a chart recommendation module 308. Further, the analysis subsystem 300 may further include a question-and-answer recommendation module 309.

The query and analysis module 302 is configured to perform new query and analysis based on a natural language. In some examples, the query and analysis module 302 may be implemented by using an NL2SQL model, which is also referred to as an NL2SQL module. The NL2SQL module is configured to process a task classified by the question-and-answer routing model as the natural language-based analysis task (for example, an NL2SQL task). The natural language used by the user in the plurality of rounds of dialogs for post-processing fine-adjustment based on the natural language input, optimizing visualized chart display of a query result, and executing an advanced analysis-related algorithm may be processed by another module in the analysis subsystem 300, for example, the label query module 304, the instruction processing module 306, the augmented analysis module 307, or the chart recommendation module 308.

After the natural language input by the user is marked as the natural language-based analysis task (request), the input may be used as an input of the NL2SQL model to execute a natural language parsing solution and an SQL generation solution, to complete data query and visualized presentation for a subsequent closed loop. Otherwise, the data analysis system 10 routes the request to a corresponding module, and different instructions support different instruction execution policies. For example, when the natural language input by the user is classified as the augmented analysis subtask, specifically, the augmented analysis subtask executes an "automatic insight generation" algorithm, chart data in the current context and a default algorithm hyperparameter configuration item may be used as an input and submitted to the augmented analysis module 307 for subsequent processing. When the natural language of the user is classified as a label query subtask, the request may be routed to the label query module 304, and the label query module 304 may decompose the natural language delivered by the user, extract a label described in the natural language, search for a label specified in context semantics, modify a modified value described by the user in the natural language, and perform data query again until a subsequent closed-loop is completed. It should be noted that, after passing through the question-and-answer routing module 202, not all instructions remain in a background for subsequent processing. When the question routing module 202 identifies that an intent of the user is to perform an operation related to modifying a visualization configuration of chart presentation, for example, when the user switches a chart type and optimizes a chart color, because rendering and drawing of the visualization configuration are implemented by the front-end UI interaction module 104, the request may be directly returned to a front-end drawing module of the system for subsequent processing of chart drawing. Based on the design of the question-and-answer routing module, the data analysis system 10 may perform an interaction operation of "what-you-see-is-what-you-get" based on the natural language and the UI, and a unified entry ensures correct contexts, to implement an engineering implementation solution of an entire procedure of data query result presentation, slot-based post-processing fine-adjustment, and visual augmented analysis.

For ease of understanding, the following separately describes different modules of the processing subsystem 300.

The NL2SQL model of the query and analysis module 302 may be decomposed into field association, knowledge inference, and SQL optimization generation. This application provides a typical NL2SQL technical route completed based on a constructed metadata knowledge graph and template and semantic similarity matching. The natural language of the user is reconstructed into a label of a general domain-specific language through field association and knowledge inference, and is subsequently assembled into a complete data query language. In a preparation phase, the data analysis system 10 may construct the metadata in the dataset to generate a plurality of intermediate knowledge structures, for example, a dictionary tree data structure having an inverted index, and semantic feature embedding (embedding), to facilitate subsequent entity matching and knowledge inference. A matching rule guided by the intermediate knowledge structure may be abstracted into three different levels: formalized template matching, structured concept level matching, and semantic space similarity matching. A natural language parsing capability and an identification capability abstracted based on the three levels of matching can effectively improve accuracy of NL2SQL.

The following describes matching capabilities of different levels.

Formalized template matching: In the preprocessing phase, the data analysis system 10 generates a field tree data structure having an inverted index based on metadata in a dataset in a question-and-answer domain. When the user inputs the natural language, the data analysis system 10 performs segmentation based on the data structure, and transfers a structured natural language into a plurality of conceptualized basic templates.

Structured concept level matching: In the preprocessing phase, the data analysis system 10 organizes the metadata in the dataset in the question-and-answer domain into a form of a knowledge graph, so that a table, a field, an enumerated value, and the like jointly construct a structure in which different concept levels are integrated. When performing natural language parsing, the data analysis system 10 may invoke the knowledge graph to extract an associated entity, to obtain complete association information.

Semantic space similarity matching: In the preprocessing phase, the data analysis system 10 performs semantic feature embedding (Embedding) based on the metadata in the dataset in the question-and-answer domain. For example, the data analysis system 10 may perform semantic feature embedding by using a deep learning-based pre-trained model, to transfer sampling of discrete metadata into a continuous semantic space. When performing the natural language parsing, the data analysis system 10 performs similarity matching in the semantic space on an association result obtained by searching a segment from the knowledge graph, to generate a final inference result.

Based on the similarity matching technology in the foregoing NL2SQL technical solution, the data analysis system 10 further provides a question recommendation capability for the user in a single question-and-answer domain and an association and supplement capability for the user in a natural language input procedure. The capabilities may be implemented by the question-and-answer recommendation module 309. The question-and-answer recommendation module 309 is dedicated to resolving a "cold start" problem of the user in a process of analyzing and exploring the dataset in the question-and-answer domain, to guide the user to discover a potential feature pattern and obtain data value.

The label query module 304 is configured to parse a label, and construct a query statement based on the label, to implement data analysis. The label query module 304 undertakes a capability of, after the user directly performs the "what-you-see-is-what-you-get" interaction on the UI interface to perform post-processing fine-adjustment on a data analysis result returned by the NL2SQL model, generating a data query result based on a configuration modified by the user. The label query module 304 is intended to: construct, from a data structure defined by a label of an existing chart, a domain-specific language representing the chart slot information, generate, based on the DSL, a basic SQL statement that needs to be queried by the user, and deliver the basic SQL statement to an underlying query execution engine, to finally generate a data query content result needed by the user.

A design of the domain-specific language is an intermediate bridge between label display of front-end page interaction and efficient SQL statement combination and generation. A typical design is to support generation of a plurality of types of SQL clauses and associate label interaction modification with the SQL clauses, for example, common SELECT, WHERE, HAVING, GROUP BY, ORDER, LIMIT, and OFFSET clauses, to build a basic SQL generation capability.

In the technical solutions of this application, the data analysis system 10 may define three types of labels returned through data query: a field label, a filter criterion label, and a configuration item label. The filter criterion label is abstracted as a triplet including a field, a filter operator, and an enumerated value. Basic label information of the field includes basic metadata information of the field. In addition, information such as an aggregation manner and a sorting manner of the field is consistently associated with the field label to ensure that the user can simply configure all association information related to the field in a labeled configuration on the UI interface.

In terms of overall presentation of the label, the data analysis system 10 designs a set of rule-based label display logic. In the logic, aggregation fields and aggregated fields in the query result are displayed in groups and separated by markers, to construct information about a queried main field. The data analysis system 10 sequentially displays filter labels in groups after the queried main field based on AND/OR logic, constructs a clause related to the filter criterion of the data query, and displays the configuration item label after a presented segmentation label. Based on this labeled display logic, a DSL data structure designed by the data analysis system 10 also includes three parts: a field, a filter criterion, and a configuration item, and a list structure is used in each part to maintain all corresponding content. When a label is concatenated to generate an SQL, SQLs of different SQL database syntax may be separately generated based on information related to a data source in the field label, so that the SQLs can adapt to wider scenarios.

Based on the foregoing design of the domain-specific language, the data analysis system 10 can generate the data analysis result through the natural language input by the user, and can obtain the adjusted data analysis result by reconfiguring the existing label, to implement directional adjustment (for example, fine-adjustment) performed in a multi-round dialog box by the user on an unexpected result returned through model data query. This user interaction form of the directional adjustment also supports configuration by using a natural language input. This operation is classified into and annotated as a labeled segment query instruction by using a classifier of the question-and-answer routing module, to generate, based on a context, an adjusted result needed by the user. These two interaction operations ultimately achieve a same goal.

The instruction processing module 306 is configured to route, based on the instruction-based operation, the request to different modules for processing. For example, when the instruction-based operation is an augmented analysis operation, the request is routed to the augmented analysis module 307 for augmented analysis, and then a data chart and annotated analysis annotation (a result of the augmented analysis) are input to the chart recommendation module 308. The chart recommendation module 308 draws a chart, and displays the chart on the UI interaction module 104. For another example, when the instruction-based operation is chart type modification or chart presentation style update, the instruction processing module 306 may route the request to the UI interaction module 104, the UI interaction module 104 performs chart drawing and update, and displays an updated chart on the UI interaction module 104. When the instruction-based operation is label modification, the request is routed to the label query module 304 and the chart recommendation module 308, a query statement is reconstructed based on a modified label, and adjusted chart data is obtained by using the query execution engine. The chart recommendation module 308 performs chart drawing and update based on the adjusted chart data, and displays an updated chart on the UI interaction module 104.

The augmented analysis module 307 is configured to perform pattern identification or execute a data mining algorithm on a chart generated by the user based on the natural language input and the UI interaction, to generate an analysis annotation. The augmented analysis module 307 is further configured to derive and return an analysis insight chart to assist the user in making an analysis decision. The analysis annotation generated by the augmented analysis module 307 may be delivered to the UI interaction module 104 together with data obtained through query and analysis, and the data and the analysis annotation are finally presented to the user in a visualized form.

The UI interaction module 104 does not sense a background analysis procedure, and only needs to process drawing capabilities for different types of data. From a perspective of a form and a structure, the augmented analysis module 307 may be a single functional module in the data analysis system 10, or may be an introduced independent analysis microservice. This ensures plug-and-play of the augmented analysis module 307 in the system and facilitates decoupling.

From a perspective of richness of tasks that can be integrated, a typical augmented analysis module 307 may have good scalability, support integration of various singleton analysis algorithms to support the data analyst in various analysis tasks, such as anomaly detection, prediction alarm, and root cause analysis, and may also support integrated high-level analysis algorithms, such as intelligent insight generation, automatic chart recommendation, and automatic story generation. This type of analysis needs to integrate a multi-factor analysis task, for example, feature mining, association analysis, anomaly pattern definition, and cause analysis, to help the user obtain a data insight in an end-to-end manner.

The chart recommendation module 308 is intended to construct an automatic selection solution at a mapping manner level from the data/metadata returned by the query execution engine and the analysis annotation to visualized visual coding selection. A visualized chart used in a common BI product analysis dashboard mainly includes a classic chart, for example, a table, a line chart, a bar chart, and an area chart. In a final visual display manner recommended by the chart recommendation module 308, a design space in a classic BI scenario may also be used as a recommended universal set. In this design space, a typical chart recommendation module 308 may include the following:
Chart type recommendation: The chart recommendation module 308 supports automatic selection of a chart visualization display form for data returned through query. A recommended display form can comply with common knowledge in the industry and experience of visualization experts, and is both aesthetic and scientific.
Automatic slot recommendation: In addition to the table, both classic visualized chart configuration and conventional drag-and-drop presentation-based BI need the user to bind data fields on a plurality of different slots, such as an x-axis (horizontal axis), a y-axis (vertical axis), and a legend, on the visualized chart. The chart recommendation module 308 can automatically assemble different data fields on specified slots, to generate a coding mapping manner with a large information amount and high visual space utilization.
Scale recommendation: The scale recommendation focuses on optimizing a visual effect of data on a continuous axis, and focuses on fidelity of data presentation. For example, the recommendation supports automatic recommendation, such as linear and logarithmic mapping, based on a field type and data distribution.
Intelligent color matching recommendation: Color coding is an important coding mode in visual channel coding. An appropriate color matching manner enables the user to clearly experience comparison of different data and obtain a data insight more effectively.
Intelligent data processing recommendation: Before the chart is presented, data needs to be cleaned and quality needs to be improved to ensure correctness of data presentation. Intelligent processing for missing values is important. The chart recommendation module 308 can automatically perform rule-based filling on returned data.

It is considered that an input of the chart recommendation module 308 designed in the system includes table field metadata and data returned through query. A typical algorithm of the chart recommendation module 308 mainly considers the following indicators of a rule.

Data amount: A quantity of pieces of data returned through query affects the chart type and slot recommendation. A large data amount indicates that a large quantity of visualized elements are used to encode data, causing visual congestion in a limited visual focus area. In this rule, this phenomenon is avoided.

Field type: The field type is very important in determining a chart slot in conventional BI. Generally, a BI engine classifies fields into dimensions and measures based on different data types. Different chart slots have specific restrictions on embedding of dimensions and measures. In addition, a field of a specific type in a specific chart type needs to be placed in a specific slot according to some conventional rules. For example, a field of a time type is used as an x-axis of a line chart to display a time-varying feature.

Field semantics: The field semantics are obtained based on metadata information such as a field alias and a description. Semantic information is used to distinguish between axes and legend slots for fields of a plurality of data types, and implement some customized color coding configurations.

Field data distribution: The field data distribution is mainly used for chart scale recommendation. For example, data distributed in a plurality of single cells can be evenly distributed on an axis to maximize visual space utilization.

The foregoing describes the data analysis system 10 from a perspective of function modularization, and the following describes the data analysis system in this application from a perspective of interaction.

The data analysis system 10 in this application may be a visualized data query and analysis dialog-based system implemented by combining a natural language and what-you-see-is-what-you-get interaction in a BI scenario. An interface that can be directly presented for a user is an interface of a dialog box with both text and images. All subsequent interaction operations and analysis of the user are implemented and supported on the interface. The dialog-based system can be easily integrated into an existing BI analysis engine as a plug-in. A question-and-answer domain constructed by using a full dataset used in a single created dashboard in the BI analysis engine is used to determine an overall scope of a dialog for data query and analysis of the user.

The question-and-answer domain is a basic unit for implementing a plurality of rounds of question-and-answer in the data analysis system 10. In a preparation and construction phase, the data analysis system 10 summarizes metadata information of tables and fields and configuration information such as synonyms in a plurality of datasets and constructs a knowledge graph. All subsequent functions, such as question recommendation, data query supported by a natural language, data query after user configuration adjustment, and visualized chart presentation, can be performed based on the question-and-answer domain. The data analysis system can also export a final analysis result chart generated after the plurality of rounds of dialogs of the user to the existing dashboard of the BI engine for storage and sharing.

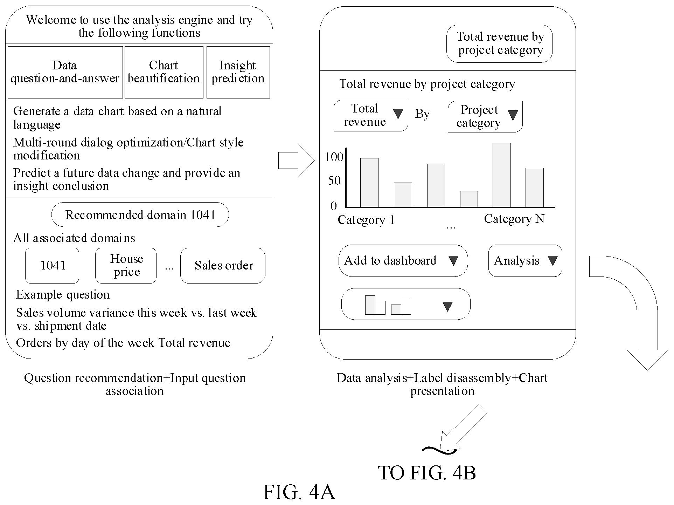

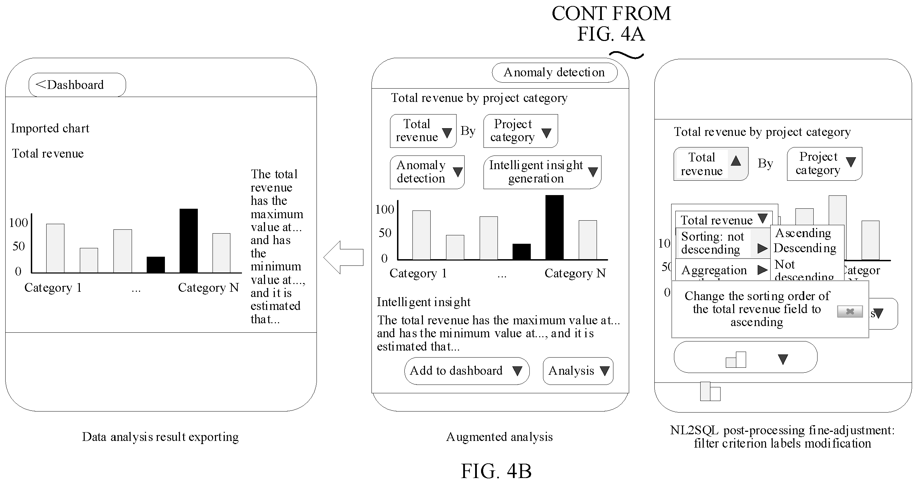

FIG. 4A and FIG. 4B show an interaction procedure in which a data analysis system performs data query and analysis. The procedure specifically includes the following phases.

When the user opens a home interface of the data analysis system 10 for the first time, a dialog box of the home interface may present a basic function usage description, all question-and-answer domains associated with a current dataset, and a recommended question-and-answer domain for the user. The data analysis system 10 recommends a plurality of optional data analysis questions based on a current question-and-answer domain, to help the user resolve a "cold start" problem in data exploration and analysis.

The user may switch a theme of a current dialog to a target theme by clicking/tapping any recommended theme label button, and the data analysis system 10 may re-recommend dialog content. The user may directly click/tap any dialog question recommended by the system, or input a natural language in a text box to directly perform data analysis. The data analysis system 10 may process input content of the user. If the input content is identified as a natural language-based analysis task (data analysis question), a label and a data analysis result obtained through segmentation and parsing may be returned, and a label and a visualized chart component that are finally presented to the user are generated and returned based on a chart recommendation module.

If the user is not satisfied with the returned data analysis result, the data analysis system 10 further supports a simple and convenient post-processing fine-adjustment interaction operation. The user may click/tap any label generated through natural language parsing to expand the label and view details about a field or a filter criterion configuration generated through model parsing, such as basic information, an aggregation manner, and a sorting manner of the field, and a field, an operator, and an enumerated value of the filter criterion. The user can modify an existing field label through simple menu-based interaction. After the user modifies the field label, the data analysis system 10 may generate a natural language description for user interaction, which is the same as the natural language content directly input by the user, update a dialog on a front-end interface, process a response, and then return a satisfactory result after a user configuration is updated.

It should be noted that the data analysis system 10 not only supports label interaction, but also allows the user to directly use the natural language input to reproduce the foregoing fine-adjustment configuration process. Regardless of whether the user directly uses the natural language for interaction or directly performs menu-based what-you-see-is-what-you-get interaction based on a UI, the data analysis system 10 may maintain and generate a unified context. This achieves a same goal without affecting a subsequent operation. This process may be iteratively performed a plurality of times to ensure that the user can obtain an optimal customized presentation form in terms of correctness of chart data and aesthetic presentation of a chart.

The data analysis system 10 not only supports configuration of the data analysis result generated by the natural language, but also enables one-click application of an augmented analysis algorithm to assist the user in intelligent decision-making. This lowers an analysis threshold for generating a data insight. The user may directly click/tap an advanced analysis option on any chart returned by the system in a multi-round dialog on the interface, or directly input the natural language in the text box to execute a specified advanced analysis capability. The data analysis system 10 may execute a corresponding analysis algorithm based on an advanced analysis category assigned by the user, for example, anomaly detection and intelligent insight generation, and return generated specific annotation information to be attached to a visualized data chart, so that the visualized data chart is presented in a concise and aesthetically pleasing form.

For example, the data analysis system 10 performs anomaly detection, and may add a highlighted annotation to the returned chart. The data analysis system 10 performs intelligent insight generation, and may automatically generate a plurality of chart feature insights described in a natural language, and present the plurality of graph feature insights on a dialog box interface. When different types of analysis annotations are attached to the chart, the data analysis system 10 may present different algorithm labels on a front-end chart component, and the user may also configure configurable hyperparameters (for example, prediction windows or prediction periods) of different algorithms in a natural language input form or directly in a menu-based what-you-see-is-what-you-get interaction form, to generate a valuable data chart. When the user obtains a satisfactory data analysis chart and intends to generate data insights to integrate the data insights to generate a complete data story, the user may import the chart in the dialog box into the dashboard, which is in an editing state, of the BI engine integrated in the system for storage, to facilitate sharing.

Based on the foregoing data analysis system 10, this application further provides a data analysis method. The following describes the data analysis method in this application with reference to embodiments.

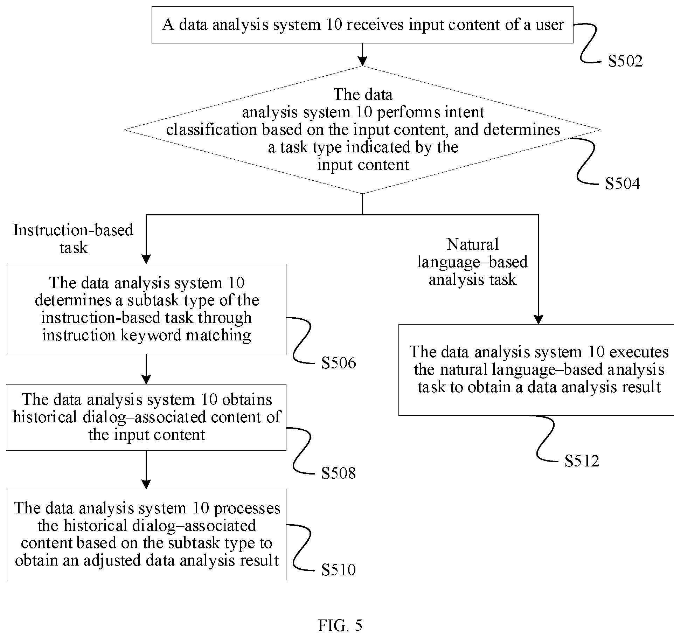

FIG. 5 is a flowchart of a data analysis method. The method includes the following steps.

S502: The data analysis system 10 receives input content of a user.

The input content may be a natural language, for example, an NL2SQL-based question-and-answer. The input content may alternatively be an interaction operation, for example, an instruction-based selection performed by the user on a chart in an existing dialog, and a directional adjustment of the chart, including but not limited to a label modification (for example, post-processing fine-adjustment of a label) of a data analysis result (usually in a chart form, also referred to as a data analysis result chart in some cases) by the user, an instruction-based modification of a chart presentation style and a chart type by the user, or an implementation of an augmented analysis algorithm.

S504: The data analysis system 10 performs intent classification based on the input content, and determines a task type indicated by the input content. When the task type indicated by the input content is an instruction-based task, S506 is performed. When the task type indicated by the input content is a natural language-based analysis task, S512 is performed.

The task type includes the natural language-based analysis task or the instruction-based task. The instruction-based task is used to perform directional adjustment on an existing data analysis result.

During specific implementation, the data analysis system may obtain a feature vector of the input content, and obtain a feature vector of at least one dialog topic tree of the user. Each node in the dialog topic tree records information about a round of dialog, the information about the dialog includes a natural language input by the user and/or a label parsed out from the natural language, and the feature vector of the dialog topic tree is determined based on a feature vector of a node in the dialog topic tree.

The data analysis system 10 may determine a similarity between the feature vector of the input content and the feature vector of the at least one dialog topic tree. When a similarity between the feature vector of the input content and a feature vector of a target topic tree in the at least one dialog topic tree meets a first specified condition, the data analysis system 10 may determine that the task type is the instruction-based task. The first specified condition may be that a similarity is greater than a first threshold. Further, the first specified condition may include that the similarity is the maximum.

Further, if a similarity between the feature vector of the input content and a feature vector of any dialog topic tree in the at least one dialog topic tree does not meet the first specified condition, it indicates that the input content does not match any dialog topic tree. The data analysis system 10 may determine that the task type indicated by the input content is the natural language-based analysis task.

S506: The data analysis system 10 determines a subtask type of the instruction-based task through instruction keyword matching.

The subtask type includes at least one of augmented analysis, chart type modification, chart presentation style modification, and label modification. Correspondingly, the data analysis system 10 may match the input content with at least one of a chart type keyword, an algorithm keyword, or a chart style keyword, to determine the subtask type.

In some possible implementations, when the input content successfully matches the chart type keyword, the data analysis system 10 determines that the subtask type is the chart type modification; when the input content successfully matches the algorithm keyword, the data analysis system 10 determines that the subtask type is the augmented analysis; when the input content successfully matches the chart style keyword, the data analysis system 10 determines that the subtask type is the chart presentation style modification; or when matching with the input content fails, the data analysis system 10 determines that the subtask type is the label modification.

S508: The data analysis system 10 obtains historical dialog-associated content of the input content.

Specifically, the data analysis system 10 may determine a similarity between the feature vector of the input content and a feature vector of at least one node in the target topic tree. When a similarity between the feature vector of the input content and a feature vector of a target node in the target topic tree meets a second specified condition, the data analysis system 10 obtains the feature vector of the target node. The feature vector is obtained by encoding at least one of the natural language input by the user, chart slot information, chart data, and a chart presentation style, and the feature vector of the target node may be used as the historical dialog-associated content of the input content.

Further, the data analysis system 10 may further create, for the target topic tree, a child node belonging to the target node, where the child node is used to record an instruction operation of a current round of dialog and returned chart slot information. In this way, when the user is still not satisfied with an adjusted data analysis result, further adjustment may be performed based on a feature vector of the child node.

S510: The data analysis system 10 processes the historical dialog-associated content based on the subtask type to obtain the adjusted data analysis result.

When subtask types are different, the data analysis system 10 may process the historical dialog-associated content in different manners. The input content of the user is classified as an augmented analysis subtask, which is, for example, executing an "automatic insight generation" algorithm, and the data analysis system 10 may use chart data of a current context and a default algorithm hyperparameter configuration item as an input to perform augmented analysis. When the input content of the user is classified as a label query subtask, the data analysis system 10 may decompose the natural language delivered by the user, extract a label described in the natural language, search for a label specified in context semantics, modify a modified value described by the user in the natural language, and perform data query again until a subsequent closed-loop is completed. It should be noted that an intent of the user is to perform an operation related to modifying a visualization configuration of chart presentation, for example, when the user switches a chart type and optimizes a chart color, the data analysis system may perform subsequent processing on chart drawing by using a front-end drawing module, to implement chart drawing and update.

S512: The data analysis system 10 executes the natural language-based analysis task to obtain the data analysis result.

After the natural language input by the user is marked as the natural language-based analysis task (request), the input may be used as an input of an NL2SQL model. The data analysis system 10 may execute a natural language parsing solution and an SQL generation solution based on the NL2SQL model, to complete data query and visualized presentation for a subsequent closed loop.

Further, the data analysis system 10 may further create a new dialog topic tree, where the dialog topic tree includes a root node, and the root node is configured to record the input content and a label parsed out from the input content. In this way, when the user is not satisfied with a data analysis result of a current round, further adjustment may be performed based on a feature vector of the root node.

It should be noted that S512 is an optional step of this embodiment of this application, and S512 may alternatively not be performed when the data analysis method in this embodiment of this application is performed.

It can be learned from the foregoing content descriptions that, in the data analysis method of this application, when a data analysis result is an unexpected result, the instruction-based task can be executed to perform directional adjustment the data analysis result, where the instruction-based task may achieve "what-you-see-is-what-you-get". "What-you-see-is-what-you-get" directional adjustment may be combined with an interaction manner of a natural language dialog, to construct a system that supports both a smooth natural language dialog and rich "what-you-see-is-what-you-get" UI interaction. This improves data analysis efficiency and user experience.

The following describes the data analysis method in this application with reference to an application scenario, for example, a scenario in which the data analysis method is used by an analysis engine to assist a user in generating an insight in a multi-round dialog manner.

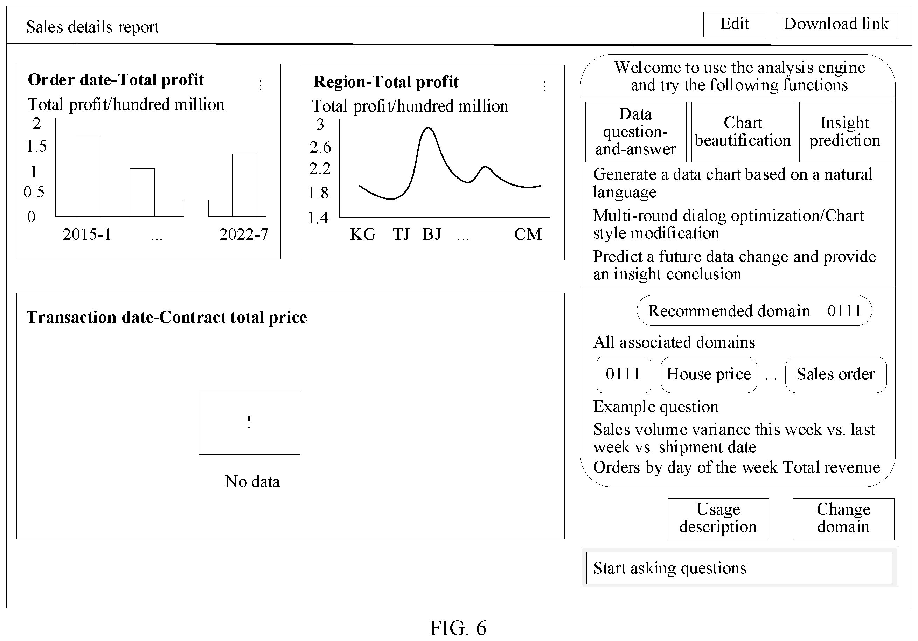

An interface shown in FIG. 6 shows content of a dashboard of the analysis engine in a viewing state. The left side shows dashboards saved by the user. The user can open a data analysis system, that is, a dialog-based interaction system for data query and analysis, on a menu bar at the top. After the user clicks/taps and opens a dialog box, a usage description, a question-and-answer domain constructed based on metadata in a dataset used by the current dashboard, and a recommended question generated based on the question-and-answer domain are first presented for the user.

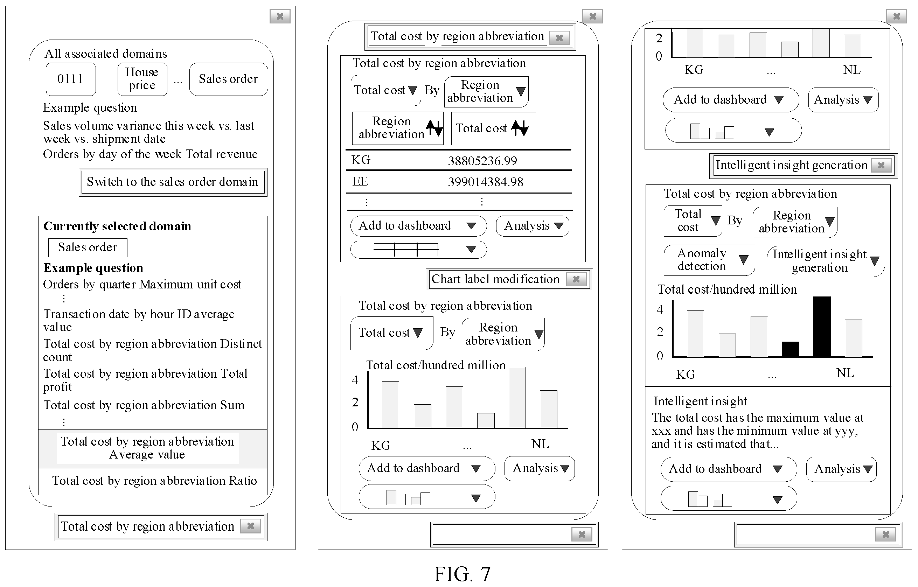

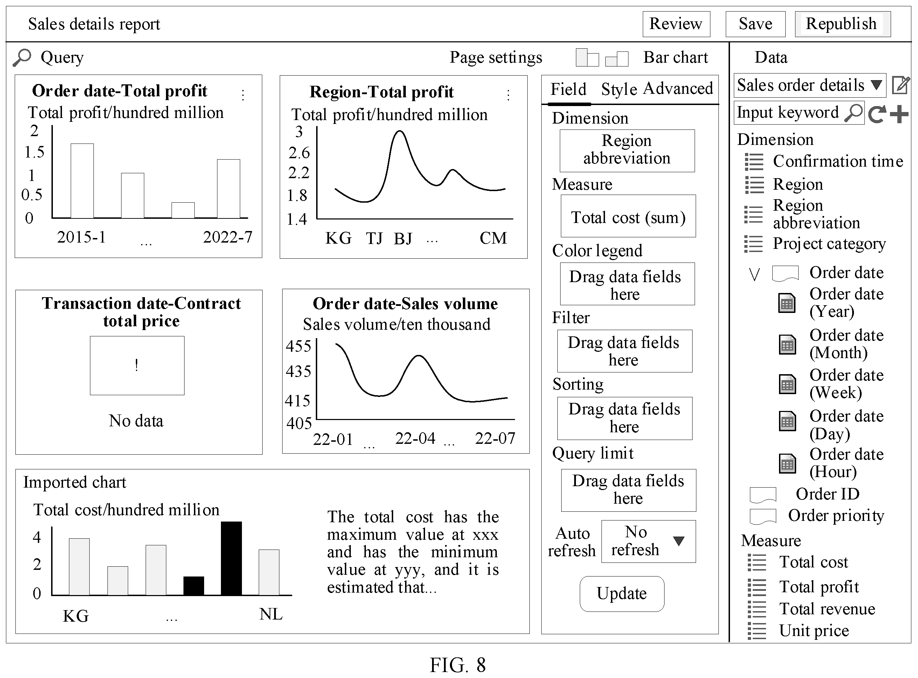

The user may click/tap to switch to any question-and-answer domain. The data analysis system updates a recommended question in the question-and-answer domain. After the user inputs a natural language in the text box, the data analysis system can generate associated and supplemented content. Based on the natural language input by the user, the data analysis system may parse the natural language and generate a label, construct a query statement based on the label, and execute the query statement by using a query execution engine to query data, to obtain a data analysis result. A chart recommendation module generates a recommended chart type based on the data analysis result. The user can directly perform "what-you-see-is-what-you-get" modification on a chart label, for example, update a configuration item, or add an augmented analysis algorithm to an existing chart based on the natural language input, and update the result. An updated chart may be returned to the user in the dialog box. The user can continue to update a dialog through interaction by using the natural language. As shown in FIG. 7, the user can conveniently export a chart of a data analysis result and save the chart in the current dashboard. FIG. 8 shows an interface on which a chart of a data analysis result is applied to a dashboard of an analysis engine.

The analysis engine supports presentation of multi-modal rich text content in a multi-round dialog scenario, and supports hybrid easy-to-use interaction, to resolve a problem that a data analysis result in a related method is only dialog content of a natural language or a non-interactive image, or a result is directly presented without a dialog analysis procedure. This improves analysis immersion and usability. In the analysis engine that supports a multi-round dialog procedure, an interaction operation of "what-you-see-is-what-you-get" can be performed based on the natural language and the UI, and a unified entry ensures correct contexts, to implement data query result presentation, slot-based post-processing fine-adjustment, and visual augmented analysis.

Based on the foregoing method embodiments, this application further provides a data analysis system 10. As shown in FIG. 1, the data analysis system 10 includes:
an interaction subsystem 100, configured to receive input content of a user;
a routing control subsystem 200, configured to: perform intent classification based on the input content, determine a task type indicated by the input content, where the task type includes a natural language-based analysis task or an instruction-based task, when the task type indicated by the input content is the instruction-based task, determine a subtask type of the instruction-based task through instruction keyword matching, and obtain historical dialog-associated content of the input content; and
an analysis subsystem 300, configured to process the historical dialog-associated content based on the subtask type to obtain an adjusted data analysis result.

For example, the interaction subsystem 100, the routing control subsystem 200, and the analysis subsystem 300 may be implemented by hardware, or may be implemented by software.

When the interaction subsystem 100, the routing control subsystem 200, and the analysis subsystem 300 are implemented by using software, the interaction subsystem 100, the routing control subsystem 200, and the analysis subsystem 300 may be application programs, for example, computing engines, running on a computer device. The application program may be provided as a virtualization service for a user to use. The virtualization service may include a virtual machine (virtual machine, VM) service, a bare metal server (bare metal server, BMS) service, and a container (container) service. The VM service may be a service of virtualizing a virtual machine (virtual machine, VM) resource pool on a plurality of physical hosts (for example, computing devices) by using a virtualization technology, to provide a VM on demand for the user to use. The BMS service is a service of virtualizing a BMS resource pool on a plurality of physical hosts to provide a BMS on demand for the user to use. The container service is a service of virtualizing a container resource pool on a plurality of physical hosts to provide a container on demand for the user to use. The VM is a simulated virtual computer, namely, a logical computer. The BMS is an elastically scalable high-performance computing service whose computing performance is the same as that of a conventional physical machine, and has a feature of secure physical isolation. The container is a kernel virtualization technology capable of providing lightweight virtualization to isolate user spaces, procedures, and resources. It should be understood that the VM service, the BMS service, and the container service in the virtualization service are merely specific examples. During actual application, the virtualization service may alternatively be another lightweight or heavyweight virtualization service. This is not specifically limited herein.

When the interaction subsystem 100, the routing control subsystem 200, and the analysis subsystem 300 are implemented by hardware, the interaction subsystem 100, the routing control subsystem 200, and the analysis subsystem 300 may include at least one computing device, for example, a server. Alternatively, the interaction subsystem 100, the routing control subsystem 200, and the analysis subsystem 300 may be devices implemented by using an application-specific integrated circuit (application-specific integrated circuit, ASIC) or a programmable logic device (programmable logic device, PLD). The PLD may be implemented by using a complex programmable logical device (complex programmable logical device, CPLD), a field-programmable gate array (field-programmable gate array, FPGA), a generic array logic (generic array logic, GAL), or any combination thereof.

Similarly, a front-end input module 102, a UI interaction module 104, and an instruction language generation module 106 in the interaction subsystem 100 may be implemented by using software or hardware. A question-and-answer routing module 202 and a context control module 204 in the routing control subsystem 200 may also be implemented by using software or hardware. A query and analysis module 302, an instruction processing module 304, a label query module 306, an augmented analysis module 307, a chart recommendation module 308, and a question-and-answer recommendation module 309 in the analysis subsystem 300 may be implemented by using software or hardware.

In some possible implementations, the routing control subsystem 200 is further configured to:
obtain a feature vector of the input content, and obtain a feature vector of at least one dialog topic tree of the user, where each node of the dialog topic tree records information about a round of dialog, the information about the dialog includes a natural language input by the user and/or a label parsed out from the natural language, and the feature vector of the dialog topic tree is determined based on a feature vector of a node in the dialog topic tree.

The routing control subsystem 200 is specifically configured to:
determine a similarity between the feature vector of the input content and the feature vector of the at least one dialog topic tree; and
when a similarity between the feature vector of the input content and a feature vector of a target topic tree meets a first specified condition, determine that the task type is the instruction-based task.

In some possible implementations, the routing control subsystem 200 is specifically configured to:
determine a similarity between the feature vector of the input content and a feature vector of at least one node in the target topic tree; and
when a similarity between the feature vector of the input content and a feature vector of a target node in the target topic tree meets a second specified condition, obtain the feature vector of the target node, where the feature vector is obtained by encoding at least one of the natural language input by the user, chart slot information, chart data, and a chart presentation style.

In some possible implementations, the routing control subsystem 200 is further configured to:
create, for the target topic tree, a child node belonging to the target node, where the child node is used to record an instruction operation of a current round of dialog and returned chart slot information.

In some possible implementations, the routing control subsystem 200 is specifically configured to:
when the similarity between the feature vector of the input content and the feature vector of the at least one dialog topic tree does not meet the first specified condition, determine that the task type is the natural language-based analysis task.

In some possible implementations, the routing control subsystem 200 is further configured to:
create a new dialog topic tree, where the dialog topic tree includes a root node, and the root node is configured to record the input content and a label parsed out from the input content.

In some possible implementations, the subtask type includes at least one of augmented analysis, chart type modification, chart presentation style modification, and label modification.

In some possible implementations, the routing control subsystem 200 is specifically configured to:
when the input content successfully matches a chart type keyword, determine that the subtask type is the chart type modification;
when the input content successfully matches an algorithm keyword, determine that the subtask type is the augmented analysis;
when the input content successfully matches a chart style keyword, determine that the subtask type is the chart presentation style modification; or
when matching with the input content fails, determine that the subtask type is the label modification.

The data analysis system 10 may be implemented by using a computing device or a computing device cluster. The following describes the computing device and the computing device cluster in this application from a perspective of a physical implementation of hardware.

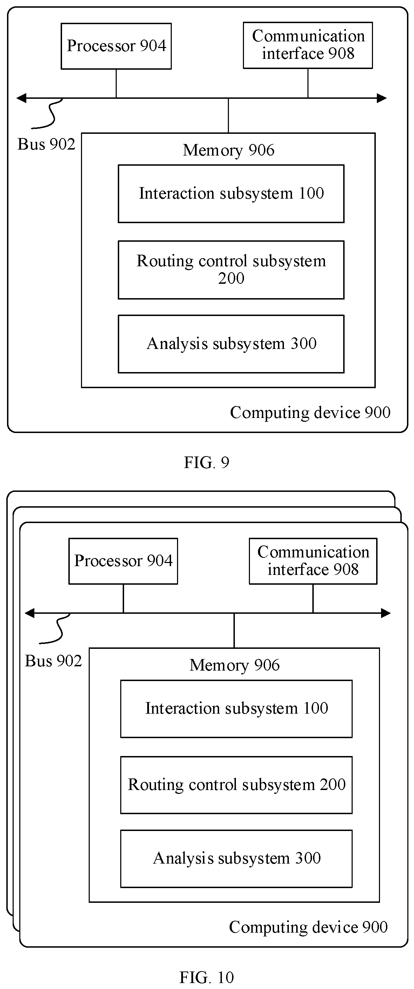

This application further provides a computing device 900. As shown in FIG. 9, the computing device 900 includes a bus 902, a processor 904, a memory 906, and a communication interface 908. The processor 904, the memory 906, and the communication interface 908 communicate with each other through the bus 902. The computing device 900 may be a server or a terminal device. It should be understood that quantities of processors and memories in the computing device 900 are not limited in this application.

The bus 902 may be a peripheral component interconnect (peripheral component interconnect, PCI) bus, an extended industry standard architecture (extended industry standard architecture, EISA) bus, or the like. The bus may include an address bus, a data bus, a control bus, and the like. For ease of representation, only one line is used for representation in FIG. 9, but this does not mean that there is only one bus or only one type of bus. The bus 902 may include a path for transferring information between various components (for example, the memory 906, the processor 904, and the communication interface 908) of the computing device 900.

The processor 904 may include any one or more of processors, such as a central processing unit (central processing unit, CPU), a graphics processing unit (graphics processing unit, GPU), a microprocessor (microprocessor, MP), or a digital signal processor (digital signal processor, DSP).

The memory 906 may include a volatile memory (volatile memory), for example, a random access memory (random access memory, RAM). The memory 906 may further include a non-volatile memory (non-volatile memory), for example, a read-only memory (read-only memory, ROM), a flash memory, a hard disk drive (hard disk drive, HDD), or a solid-state drive (solid-state drive, SSD). The memory 906 stores executable program code, and the processor 904 executes the executable program code to implement the foregoing data analysis method. Specifically, the memory 906 stores instructions used for the data analysis system 10 to perform the data analysis method.

The communication interface 908 uses a transceiver module, for example, but not limited to, a network interface card or a transceiver, to implement communication between the computing device 900 and another device or a communication network.

An embodiment of this application further provides a computing device cluster. The computing device cluster includes at least one computing device. The computing device may be a server, for example, a central server, an edge server, or a local server in a local data center. In some embodiments, the computing device may alternatively be a terminal device, for example, a desktop computer, a notebook computer, or a smartphone.

As shown in FIG. 10, the computing device cluster includes at least one computing device 900. The memory 906 in one or more computing devices 900 in the computing device cluster may store same instructions used for the data analysis system 10 to perform the data analysis method.

In some possible implementations, the one or more computing devices 900 in the computing device cluster may alternatively be configured to execute some of instructions used for the data analysis system 10 to perform the data analysis method. In other words, a combination of the one or more computing devices 900 may jointly execute the instructions used for the data analysis system 10 to perform the data analysis method.

It should be noted that memories 906 in different computing devices 900 in the computing device cluster may store different instructions for performing some of functions of the data analysis system 10.

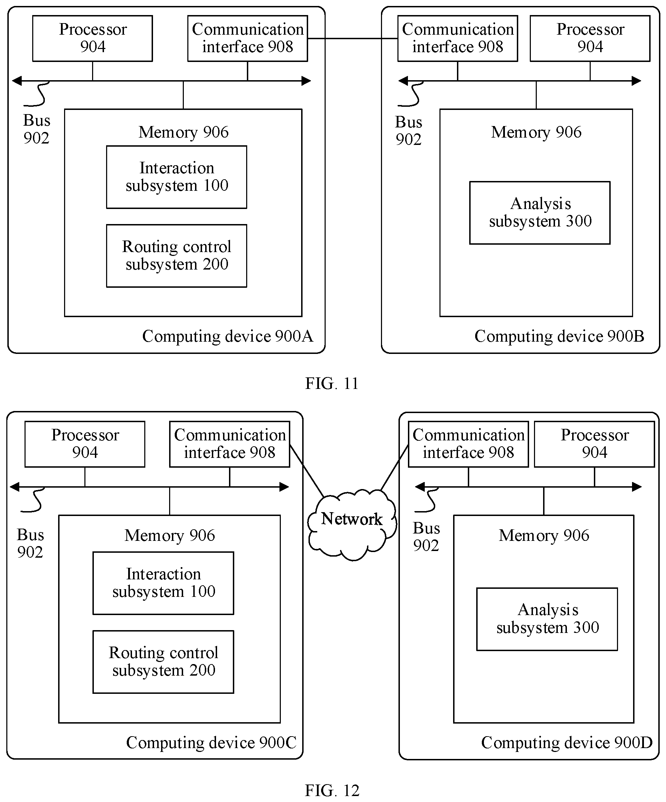

FIG. 11 shows a possible implementation. As shown in FIG. 11, two computing devices 900A and 900B are connected through a communication interface 908. The memory in the computing device 900A stores instructions used to perform functions of an interaction subsystem 100 and a routing control subsystem 200. The memory in the computing device 900B stores instructions used to execute a function of an analysis subsystem 300. In other words, the memories 906 in the computing device 900A and the computing device 900B jointly store instructions used for the data analysis system 10 to perform the data analysis method.

A connection manner between the computing device clusters shown in FIG. 11 may be considered that the data analysis method provided in this application needs a large amount of computing power for data analysis. Therefore, it is considered that the function implemented by the analysis subsystem 300 is performed by the computing device 900B.

It should be understood that the function of the computing device 900A shown in FIG. 11 may alternatively be completed by a plurality of computing devices 900. Similarly, the function of the computing device 900B may alternatively be completed by a plurality of computing devices 900.

In some possible implementations, one or more computing devices in the computing device cluster may be connected through a network. The network may be a wide area network, a local area network, or the like. FIG. 12 shows a possible implementation. As shown in FIG. 12, two computing devices 900C and 900D are connected through a network. Specifically, each computing device is connected to the network through a communication interface of the computing device. In this possible implementation, the memory 906 in the computing device 900C stores instructions for executing functions of an interaction subsystem 100 and a routing control subsystem 200. In addition, the memory 906 in the computing device 900D stores instructions for executing a function of an analysis subsystem 300.

A connection manner between the computing device clusters shown in FIG. 12 may be considered that the data analysis method provided in this application needs a large amount of computing power for data analysis. Therefore, it is considered that the function implemented by the analysis subsystem 300 is performed by the computing device 900D.

It should be understood that the function of the computing device 900C shown in FIG. 12 may alternatively be completed by a plurality of computing devices 900. Similarly, the function of the computing device 900D may alternatively be completed by a plurality of computing devices 900.

An embodiment of this application further provides a computer-readable storage medium. The computer-readable storage medium may be any usable medium that can be stored by a computing device, or a data storage device, for example, a data center, including one or more usable media. The usable medium may be a magnetic medium (for example, a floppy disk, a hard disk drive, or a magnetic tape), an optical medium (for example, a DVD), a semiconductor medium (for example, a solid-state drive), or the like. The computer-readable storage medium includes instructions, and the instructions instruct the computing device to perform the data analysis method applied to the data analysis system 10.

An embodiment of this application further provides a computer program product including instructions. The computer program product may be software or a program product that includes instructions and that can run on a computing device or be stored in any usable medium. When the computer program product runs on at least one computer device, the at least one computing device is caused to perform the data analysis method.

Finally, it should be noted that the foregoing embodiments are merely intended for describing the technical solutions of the present invention, but not for limiting the present invention. Although the present invention is described in detail with reference to the foregoing embodiments, a person of ordinary skill in the art should understand that modifications may still be made to the technical solutions described in the foregoing embodiments or equivalent replacements may be made to some technical features thereof. Such modifications or equivalent replacements do not cause corresponding technical solutions to depart from the protection scope of the technical solutions in embodiments of the present invention.

## Claims

1. A data analysis method, applied to a data analysis system, wherein the data analysis system is configured to perform data analysis through a plurality of rounds of dialogs, and the method comprises:
Receiving input content of a user;
Performing intent classification based on the input content, and determining a task type indicated by the input content, wherein the task type comprises a natural language-based analysis task or an instruction-based task;
when the task type indicated by the input content is the instruction-based task, determining a subtask type of the instruction-based task through instruction keyword matching, and obtaining historical dialog-associated content of the input content; and
processing the historical dialog-associated content based on the subtask type to obtain an adjusted data analysis result.

2. The method according to claim 1, wherein the method further comprises:
obtaining a feature vector of the input content, and obtaining a feature vector of at least one dialog topic tree of the user, wherein each node of the dialog topic tree records information about a round of dialog, the information about the dialog comprises a natural language input by the user and/or a label parsed out from the natural language, and the feature vector of the dialog topic tree is determined based on a feature vector of a node in the dialog topic tree; and
the performing intent classification based on the input content, and determining the task type indicated by the input content comprises:
determining a similarity between the feature vector of the input content and the feature vector of the at least one dialog topic tree; and
when a similarity between the feature vector of the input content and a feature vector of a target topic tree meets a first specified condition, determining that the task type is the instruction-based task.

3. The method according to claim 2, wherein the obtaining the historical dialog-associated content of the input content comprises:
determining a similarity between the feature vector of the input content and a feature vector of at least one node in the target topic tree; and
when a similarity between the feature vector of the input content and a feature vector of a target node in the target topic tree meets a second specified condition, obtaining the feature vector of the target node, wherein the feature vector is obtained by encoding at least one of the natural language input by the user, information, chart data, and a chart presentation style.

4. The method according to claim 2 or 3, wherein the method further comprises:
creating, for the target topic tree, a child node belonging to the target node, wherein the child node is used to record an instruction operation of a current round of dialog and returned chart slot information.

5. The method according to claim 2, wherein the method further comprises:
when the similarity between the feature vector of the input content and the feature vector of the at least one dialog topic tree does not meet the first specified condition, determining that the task type is the natural language-based analysis task.

6. The method according to claim 5, wherein the method further comprises:
creating a new dialog topic tree, wherein the dialog topic tree comprises a root node, and the root node is configured to record the input content and a label parsed out from the input content.

7. The method according to any one of claims 1 to 6, wherein the subtask type comprises at least one of augmented analysis, chart type modification, chart presentation style modification, and label modification.

8. The method according to claim 7, wherein the determining the subtask type of the instruction-based task through instruction keyword matching comprises:
when the input content successfully matches a chart type keyword, determining that the subtask type is the chart type modification;
when the input content successfully matches an algorithm keyword, determining that the subtask type is the augmented analysis;
when the input content successfully matches a chart style keyword, determining that the subtask type is the chart presentation style modification; or
when matching with the input content fails, determining that the subtask type is the label modification.

9. A data analysis system, wherein the system is configured to perform data analysis through a plurality of rounds of dialogs, and the system comprises:
an interaction subsystem, configured to receive input content of a user;
a routing control subsystem, configured to: perform intent classification based on the input content, determine a task type indicated by the input content, wherein the task type comprises a natural language-based analysis task or an instruction-based task, when the task type indicated by the input content is the instruction-based task, determine a subtask type of the instruction-based task through instruction keyword matching, and obtain historical dialog-associated content of the input content; and
an analysis subsystem, configured to process the historical dialog-associated content based on the subtask type to obtain an adjusted data analysis result.

10. The system according to claim 9, wherein the routing control subsystem is further configured to:
obtain a feature vector of the input content, and obtain a feature vector of at least one dialog topic tree of the user, wherein each node of the dialog topic tree records information about a round of dialog, the information about the dialog comprises a natural language input by the user and/or a label parsed out from the natural language, and the feature vector of the dialog topic tree is determined based on a feature vector of a node in the dialog topic tree; and
the routing control subsystem is specifically configured to:
determine a similarity between the feature vector of the input content and the feature vector of the at least one dialog topic tree; and
when a similarity between the feature vector of the input content and a feature vector of a target topic tree meets a first specified condition, determine that the task type is the instruction-based task.

11. The system according to claim 10, wherein the routing control subsystem is specifically configured to:
determine a similarity between the feature vector of the input content and a feature vector of at least one node in the target topic tree; and
when a similarity between the feature vector of the input content and a feature vector of a target node in the target topic tree meets a second specified condition, obtain the feature vector of the target node, wherein the feature vector is obtained by encoding at least one of the natural language input by the user, chart slot information, chart data, and a chart presentation style.

12. The system according to claim 10 or 11, wherein the routing control subsystem is further configured to:
create, for the target topic tree, a child node belonging to the target node, wherein the child node is used to record an instruction operation of a current round of dialog and returned chart slot information.

13. The system according to claim 10, wherein the routing control subsystem is specifically configured to:
when the similarity between the feature vector of the input content and the feature vector of the at least one dialog topic tree does not meet the first specified condition, determine that the task type is the natural language-based analysis task.

14. The system according to claim 13, wherein the routing control subsystem is further configured to:
create a new dialog topic tree, wherein the dialog topic tree comprises a root node, and the root node is configured to record the input content and a label parsed out from the input content.

15. The system according to any one of claims 9 to 14, wherein the subtask type comprises at least one of augmented analysis, chart type modification, chart presentation style modification, and label modification.

16. The system according to claim 15, wherein the routing control subsystem is specifically configured to:
when the input content successfully matches a chart type keyword, determine that the subtask type is the chart type modification;
when the input content successfully matches an algorithm keyword, determine that the subtask type is the augmented analysis;
when the input content successfully matches a chart style keyword, determine that the subtask type is the chart presentation style modification; or
when matching with the input content fails, determine that the subtask type is the label modification.

17. A computing device cluster, wherein the computing device cluster comprises at least one computing device, the at least one computing device comprises at least one processor and at least one memory, the at least one memory stores computer-readable instructions, and the at least one processor executes the computer-readable instructions, to cause the computing device cluster to perform the method according to any one of claims 1 to 8.

18. A computer-readable storage medium, comprising computer-readable instructions, wherein the computer-readable instructions are used to implement the method according to any one of claims 1 to 8.

19. A computer program product, comprising computer-readable instructions, wherein the computer-readable instructions are used to implement the method according to any one of claims 1 to 8.
